# EUROPÄISCHE PATENTSCHRIFT

(11) **EP 3 772 532 B1**
(45) Veröffentlichungstag und Bekanntmachung des Hinweises auf die Patenterteilung: **16.02.2022**
(21) Anmeldenummer: 19190365.7
(22) Anmeldetag: 06.08.2019
(51) Int. Cl.: C09D 13/00

(54) **FARBSTIFTMINE ODER FARBKREIDE**
COLOURED PENCIL LEAD OR COLOURED CHALK
MINE DE CRAYON DE COULEUR OU CRAIE DE COULEUR

(43) Veröffentlichungstag der Anmeldung: 10.02.2021
(73) Patentinhaber: Faber- Castell AG, 90546 Stein (DE)
(72) Erfinder: von Godin, Harald, 90522 Oberasbach (DE); Appel, Reiner, 90522 Oberasbach (DE); Kinzel, Joachim, 90547 Stein (DE); Lugert, Gerhard, 90431 Nürnberg (DE)
(74) Vertreter: Schlögl, Markus

(56) Entgegenhaltungen:
- EP-A1- 0 636 668
- EP-A1- 1 093 495
- DD-A1- 239 213
- US-A- 6 011 084

## Beschreibung

Die Erfindung betrifft eine Farbstiftmine oder Farbkreide zum Malen und/oder Zeichnen mit einer Minengrundmasse enthaltend Wachse, zumindest einen Füllstoff und zumindest ein Farbmittel.

Bekannt sind Farbstiftminen oder Farbkreiden bei denen als Bindemittel Cellulosederivate wie Natriumcarboxymethylcellulose oder Methylhydroxyethylcellulose eingesetzt werden. Ferner sind Füllstoffe und Farbmittel sowie gegebenenfalls bei den sogenannten "pre-waxed-Minen" Wachse und/oder Fette enthalten. Bei der Herstellung solcher Farbstiftminen oder Farbkreiden muss jedoch zum Quellen des Cellulosederivates beim Mischen der Rohmaterialien zunächst Wasser zugesetzt werden, welches später in einem zusätzlichen, energieverbrauchenden Bearbeitungsschritt durch Trocknen wieder entfernt werden muss. Um wasserfeste, also nicht aquarellierbare Farbstiftminen oder Farbkreiden zu erhalten, können die Minen zunächst auch ohne den Zusatz von Wachsen und/oder Fetten hergestellt und erst nach dem Trocknen in eine Schmelze aus Wachsen oder Fetten getaucht werden ("post-waxed Minen").

Ferner sind thermoplastische Farbstiftminen oder Farbkreiden bekannt, bei denen Polystyrol, Polyvinylbutyral oder andere Thermoplasten als Bindemittel eingesetzt werden und die Minen mittels Extrusionsverfahren hergestellt werden. Allerdings sind bei solchen Kunststoffminen zur thermoplastischen Erweichung des polymeren Bindemittels, zur Vermischung der Ausgangssubstanzen und bei der Extrusion relativ hohe Temperaturen notwendig. Ferner weisen solche Minen aufgrund des polymeren Bindemittels zwar eine ausreichende Festigkeit auf, sind aber hinsichtlich ihres Aufstrichverhaltens nicht optimal, da beim Erzeugen des Aufstriches relativ hohe Kräfte erforderlich sind, um eine ausreichende Deckkraft zu erreichen. Dies kann durch Erhöhung der Menge der zugesetzten Farbpigmente zwar zumindest teilweise kompensiert werden, führt jedoch zu erhöhten Kosten.

Aus EP 1 069 166 A1 sind beispielsweise solche Farbminen bzw. Farbkreiden bekannt, bei denen neben Füllstoff und Farbmittel Polyvinylbutyral als Bindemittel in Kombination mit einem Fettsäuresalz als Gleitmittel verwendet wird. Durch Variation des Gleitmittels lassen sich hier sowohl aquarellierbare als auch nicht aquarellierbare Farbminen bzw. Farbkreiden herstellen.

Eine weitere Alternative für Farbstiftminen bzw. Farbkreiden ist in EP 2 520 442 B1 beschrieben, wobei deren Zusammensetzung neben Füllstoffen und Farbmitteln auf Fetten und Wachsen basiert. Einen wichtigen Beitrag für das Eigenschaftsprofil der Minen liefert das enthaltene Fettsäuresalz Aluminiumdistearat. Nachteilig hierbei ist der vergleichsweise hohe Schmelzpunkt von 140°C von Aluminiumdistearat. Ferner sind bei Verwendung im Kinderspielzeugbereich Aluminiumgrenzwerte zu beachten und es gibt Bestrebungen, diese weiter zu reduzieren.

Es ist Aufgabe der Erfindung Farbstiftminen oder Farbkreiden zum Malen und/oder Zeichnen anzugeben, die ein verbessertes Applikationsverhalten sowie eine verbesserte Stabilität aufweisen und zudem effektiv mittels Extrusionsverfahren hergestellt werden können.

Die Aufgabe wird gelöst mit einer Farbstiftmine oder Farbkreide zum Malen und/oder Zeichnen mit den Merkmalen gemäß Anspruch 1. Die Farbstiftmine oder Farbkreide weist eine Minengrundmasse enthaltend Wachse, zumindest einen Füllstoff und zumindest ein Farbmittel auf. Erfindungsgemäß sind als Wachse zumindest ein oxidiertes Ethylen Vinylacetat Wachs (EVA) und zumindest ein funktionalisiertes Metallocen-Polyolefinwachs, beispielsweise Metallocen-Polyethylenwachs oder Metallocen-Polypropylenwachs, enthalten.

Aus Vereinfachungsgründen wird im Folgenden vorwiegend von Farbstiftminen gesprochen.

Nach einer Vielzahl von Versuchen hat sich überraschenderweise gezeigt, dass gerade durch die Kombination aus oxidierten Ethylen Vinylacetat Wachsen zusammen mit funktionalisierten Metallocen-Polyolefinwachsen Farbstiftminen hergestellt werden können, die der Aufgabenstellung gerecht werden. Die Farbstiftmine zeigt ein weiches Applikationsverhalten mit dem Ergebnis farbkräftiger und deckender Aufstriche. Die Aufstriche weisen ferner im Vergleich zu mit klassischen Verfahren hergestellten Farbstiftminen, z.B. post-waxed oder pre-waxed-Minen, eine verbesserte Lichtechtheit auf.

Die Farbstiftminen sind wasserfest und lassen sich in einem zwei-stufigen-Prozess herstellen. Die Rohmaterialien der Mine bzw. die Bestandteile der Minengrundmasse lassen sich bereits bei geringen Temperaturen von etwa 100 bis 150°C vermischen und extrudieren. Dabei kommt es zu einer Erweichung der beiden Wachs bis zu einer Konsistenz, die so beschaffen ist, dass sich trotz der ferner enthaltenen Füllstoffe und Farbpigmente Minenstränge mit einem Durchmesser von 3 bis 5 mm für Farbstiftminen und bis zu 20 mm für Farbkreiden extrudieren lassen.

Ferner hat sich gezeigt, dass die erfindungsgemäßen Farbstiftminen dabei mit einer gegenüber dem Stand der Technik erhöhten Extrusionsgeschwindigkeit von bis zu 120 kg Minenmasse pro Stunde ausgebracht werden können, da durch die Kombination aus oxidierten Ethylen Vinylacetat Wachsen zusammen mit funktionalisierten Metallocen-Polyolefinwachsen eine ausreichend feste Konsistenz der Minengrundmasse erreicht werden kann. Diese ist weder zu hart noch gummiartig, sodass die Farbstiftmine im Anschluss an die Extrusion zum einen ausreichend mechanisch stabil und bruchfest ist, zum anderen aber dennoch gut ablängbar ist. Die Farbstiftminen selbst weisen ebenfalls eine ausreichende Festigkeit auf bzw. sind stabil genug, um aus dem Extruder entnommen und weiter transportiert werden zu können. Es hat sich gezeigt, dass die Farbstiftminen im Vergleich zu bekannten Minen flexibler und weniger spröde und somit auch weniger bruchanfällig sind.

Die Farbstiftmine ist somit aus einer die genannten Komponenten bzw. Ausgangsstoffe enthaltenen Minengrundmasse bzw. Minen-Ausgangsmasse hergestellt, die thermoplastisch verarbeitet und extrudiert wird, um die Ausgangsstoffe aufzuschmelzen und zu binden. Die daraus erhaltenen Minenstränge werden gegebenenfalls anschließend abgelängt. Nach dem Erkalten der Minenmasse liegt bereits die fertige Mine vor, ein aufwändiges Entfernen von Wasser ist nicht erforderlich.

Vorzugsweise weist das zumindest eine oxidierte Ethylen Vinylacetat Wachs einen Tropfpunkt zwischen 90 und 110 °C (ISO 2176) und eine Säurezahl zwischen 15 und 35 mg KOH/g (ISO 2114) auf. Der Tropfpunkt ist zum einen entscheidend für das gute Aufstrichverhalten der Farbstiftmine, zum anderen wird dadurch die Verarbeitungstemperatur während der Extrusion im Wesentlichen mitbestimmt.

Ein solches oxidiertes Ethylen Vinylacetat Wachs wird beispielsweise unter den Handelsnamen Viscowax 453¹⁾ (Tropfpunkt: 90 - 100°C; Säurezahl: 15 - 18 mg KOH/g) oder Licowax 371 FP²⁾ (Tropfpunkt: 99 - 104°C; Säurezahl: 17 - 25 mg KOH/g) vertrieben.

Ferner hat es sich bewährt, wenn das zumindest eine oxidierte Ethylen Vinylacetat Wachs mit einem Anteil von 0,5 bis 25 Gew.-% in der Minengrundmasse enthalten ist.

Das zumindest eine funktionalisierte Metallocen-Polyolefinwachs weist vorzugsweise einen Tropfpunkt zwischen 120 und 160 °C (ISO 2176) und eine Säurezahl zwischen 16 und 50 mg KOH/g (ISO 2114) auf.

Ein solches funktionalisierte Metallocen-Polyolefinwachs wird beispielsweise unter den Handelsnamen Licocene PP MA 6252²⁾ (Tropfpunkt: 137 - 142°C; Säurezahl: 38 - 45 mg KOH/g), Licocene PE MA 4221²⁾ (Tropfpunkt: 120 - 126°C; Säurezahl: 16 - 20 mg KOH/g) Licocene PE MA 4351²⁾ (Tropfpunkt: 120 - 126°C; Säurezahl: 42 - 49 mg KOH/g) vertrieben.

Des Weiteren ist es vorteilhaft, wenn das zumindest eine funktionalisierte Metallocen-Polyolefinwachs mit einem Anteil von 0,5 bis 25 Gew.-% in der Minengrundmasse enthalten ist.

Bei einer bevorzugten Ausführungsform können zusätzlich weitere Wachse und/oder Triglyceride und/oder Fettsäuren und/oder Fettsäurederivate in der Minengrundmasse enthalten sein. Dadurch lassen sich eine gute Ausformbarkeit der Farbstiftminen bei der Extrusion sowie gute Applikationseigenschaften bei späterer Benutzung der Farbstiftmine fördern.

Insbesondere werden als weitere Wachse und/oder Triglyceride und/oder Fettsäuren und/oder Fettsäurederivate Bienenwachs, synthetisches Bienenwachs, Esterwachse, Montanwachs, Paraffinwachse, Naturwachse, insbesondere Carnaubawachs, Reiswachs, Rapswachse, gehärtete Pflanzenwachse, insbesondere hydriertes Sojabohnenöl oder hydriertes Rhizinusöl, und/oder Stearinsäure eingesetzt.

Die weiteren Wachse und/oder Triglyceride und/oder Fettsäuren und/oder Fettsäurederivate sind dabei vorzugsweise mit einem Anteil von maximal 25 Gew.-% in der Minengrundmasse enthalten.

Ein wesentlicher Anteil der Farbstiftmine oder Farbkreide wird durch zumindest einen Füllstoff gebildet, wobei sich ein Einsatz des zumindest einen Füllstoffes mit einem Anteil von 35 bis 80 Gew.-% in der Minengrundmasse als vorteilhaft herausgestellt hat.

Als Füllstoffe sind insbesondere anorganische, fein pulverisierte Füllstoffe, insbesondere Talkum, Bimsmehl, Kaolin, Glimmer, Aluminiumsilikat, Ton und/oder Calciumcarbonat geeignet, da diese aufgrund ihrer Polarität in der Minengrundmasse besonders gut gebunden werden. Zweckmäßig ist jedoch auch die Verwendung organischer Füllstoffe, insbesondere Zellulosefasern, Holzfasern und/oder Textilfasern. Als Füllstoffe können auch anorganische Pigmente wie Titaniumdioxid, Zinkoxid und/oder Bariumsulfat eingesetzt werden.

Als Farbmittel ist insbesondere zumindest ein Farbstoff und/oder zumindest ein anorganisches Pigment und/oder zumindest ein organisches Pigment in der Minengrundmasse enthalten. Aufgrund der niedrigeren Extrusionstemperatur lassen sich auch Farbmittel mit eingeschränkter Temperaturstabilität, wie beispielsweise Azopigmente oder Fluoreszenzpigmente einsetzen.

Als vorteilhafte Einsatzkonzentration für das zumindest eine Farbmittel hat sich ein Anteil von 0,5 - 50 Gew.-%, insbesondere ein Anteil von 0,5 - 40 Gew.-% in der Minengrundmasse herausgestellt.

Schließlich ist es noch von Vorteil, wenn in der Minengrundmasse zumindest ein Additiv, insbesondere ein Gleitmittel enthalten ist. Exemplarisch können hier Salze von Fettsäuren wie Calciumstearat, Magnesiumstearat, Zinkstearat oder Natriumstearat genannt werden.

Vorzugsweise ist der Anteil des Additivs in der Minengrundmasse auf maximal 10 Gew.-% begrenzt.

Zusammenfassend lässt sich für die erfindungsgemäße Farbstiftmine oder Farbkreide folgende Basisrezeptur angeben:

| | |
|---|---|
| Ethylen Vinylacetat Wachs | 0,5 - 25 Gew.-% |
| Funktionalisiertes Metallocen-Polyolefinwachs | 0,5 - 25 Gew.-% |
| Wachse, Trigylceride, Fettsäuren und -derivate | bis 25 Gew.-% |
| Füllstoffe | 35 - 80 Gew.-% |

| | |
|---|---|
| Farbmittel | 0,5 - 40 Gew.-% |
| Additive | bis 10 Gew.-% |

Die Herstellung der Farbstiftmine oder Farbkreide erfolgt in einem zwei-stufigen-Prozess. Zunächst werden die pulverförmigen Rohmaterialien in Knetern oder Compoundern oder Mischkesseln gemischt. Anschließend werden die Farbstiftminen oder Farbkreiden mit einem Schneckenextruder ausgeformt. Dabei wird die Minengrundmasse bei einer Temperatur zwischen 100 und 150°C zu Minensträngen extrudiert, die anschließend abgelängt werden.

Nachfolgend sind vier Beispielrezepturen für Farbstiftminen bzw. Farbstiftkreiden angeführt. Die Angaben in den Beispielrezepturen in Gewichtsprozent beziehen sich jeweils auf die Anteile in der Minengrundmasse.

### Beispiel 1:

Beispielrezeptur für eine hellblaue Farbstiftmine mit einem Durchmesser von 4,0 mm:

| | |
|---|---|
| Viscowax | 1,5 Gew.-% |
| Licocene PP MA 6252²⁾ | 6,0 Gew.-% |
| Polycerin 9542 (CAS No. 91744-73-9 )³⁾ | 10,0 Gew.-% |
| Zinkstearat | 3,0 Gew.-% |
| Calciumcarbonat | 10,0 Gew.-% |
| Talkum | 50,0 Gew.-% |
| Titandioxid (C.I. 77891) | 5,0 Gew.-% |
| Ultramarinblau (C.I. 77007) | 14,5 Gew.-% |

### Beispiel 2:

Beispielrezeptur für eine rote flexible, weiche Farbstiftmine mit einem Durchmesser von 3,5 mm:

| | |
|---|---|
| Licowax 371 EP²⁾ | 8,0 Gew.-% |
| Licocene PE MA 4221²⁾ | 5,0 Gew.-% |
| Ceratrom B-WAX-V³⁾ | 7,0 Gew.-% |
| Kaolin | 62,0 Gew.-% |
| Lithopone (C.I. 77115) | 10,0 Gew.-% |
| Pigment Red 112 (C.I. 12370) | 8,0 Gew.-% |

### Beispiel 3:

Beispielrezeptur für eine violette Farbstiftmine mit einem Durchmesser von 3,8 mm:

| | |
|---|---|
| Viscowax 453¹⁾ | 2,0 Gew.-% |
| Licocene PE MA 4351²⁾ | 5,0 Gew.-% |
| Polycerin 9542³⁾ | 7,0 Gew.-% |
| Bienenwachs | 3,0 Gew.-% |
| Calciumstearat | 7,0 Gew.-% |
| Kaolin | 66,0 Gew.-% |
| Pigment Violett 23 (C.I. 51319) | 10,0 Gew.-% |

### Beispiel 4:

Beispielrezeptur für eine runde, gelbe, fluoreszente Farbkreide mit einem Durchmesser von 10,0 mm und einer Länge von 100 mm:

| | |
|---|---|
| Licowax 371 FP²⁾ | 21,0 Gew.-% |
| Licocene PE MA 4351²⁾ | 21,0 Gew.-% |
| Calciumstearat | 3,0 Gew.-% |
| Glimmer (Mica) | 10,0 Gew.-% |
| Talkum | 40,0 Gew.-% |
| Pigment Yellow 101 (C.I. 48052) | 5,0 Gew.-% |

Die Kreide gemäß Beispiel 4 ist aufgrund des im Vergleich zu den Beispielen 1 bis 3 deutlich höheren Wachsanteils bruchstabiler. Ferner weist sie eine vergleichsweise sehr weiche Abgabe auf.

### Hersteller:

1) Innospec Leuna GmbH, D 06237 Leuna
2) Clariant International LTD, CH 4132 Muttenz
3) Th. C. TROMM GmbH, D 50735 Köln

## Patentansprüche

1. Farbstiftmine oder Farbkreide zum Malen und/oder Zeichnen mit einer Minengrundmasse enthaltend Wachse, zumindest einen Füllstoff mit einem Anteil von 35 bis 80 Gew.-% in der Minengrundmasse und zumindest ein Farbmittel, **dadurch gekennzeichnet, dass** als Wachse zumindest ein oxidiertes Ethylen Vinylacetat Wachs (EVA) und zumindest ein funktionalisiertes Metallocen-Polyolefinwachs enthalten sind.

2. Farbstiftmine oder Farbkreide nach Anspruch 1, **dadurch gekennzeichnet, dass** das zumindest eine oxidierte Ethylen Vinylacetat Wachs einen Tropfpunkt zwischen 90 und 110 °C und eine Säurezahl zwischen 15 und 35 mg KOH/g aufweist.

3. Farbstiftmine oder Farbkreide nach einem der Ansprüche 1 oder 2, **dadurch gekennzeichnet, dass** das zumindest eine oxidierte Ethylen Vinylacetat Wachs mit einem Anteil von 0,5 bis 25 Gew.-% in der Minengrundmasse enthalten ist.

4. Farbstiftmine oder Farbkreide nach einem der vorhergehenden Ansprüche, **dadurch gekennzeichnet, dass** das zumindest eine funktionalisierte Metallocen-Polyolefinwachs einen Tropfpunkt zwischen 120 und 160 °C und eine Säurezahl zwischen 16 und 50 mg KOH/g aufweist.

5. Farbstiftmine oder Farbkreide nach einem der vorhergehenden Ansprüche, **dadurch gekennzeichnet, dass** das zumindest ein funktionalisierte Metallocen-Polyolefinwachs mit einem Anteil von 0,5 bis 25 Gew.-% in der Minengrundmasse enthalten ist.

6. Farbstiftmine oder Farbkreide nach einem der vorhergehenden Ansprüche, **dadurch gekennzeichnet, dass** in der Minengrundmasse weitere Wachse und/oder Triglyceride und/oder Fettsäuren und/oder Fettsäurederivate enthalten sind.

7. Farbstiftmine oder Farbkreide nach Anspruch 6, **dadurch gekennzeichnet, dass** Bienenwachs, synthetisches Bienenwachs, Esterwachse, Montanwachs, Paraffinwachse, Naturwachse, insbesondere Carnaubawachs, Reiswachs, Rapswachse, gehärtete Pflanzenwachse, insbesondere hydriertes Sojabohnenöl oder hydriertes Rhizinusöl, und/oder Stearinsäure enthalten sind.

8. Farbstiftmine oder Farbkreide nach einem der Ansprüche 6 oder 7, **dadurch gekennzeichnet, dass** die weiteren Wachse und/oder Triglyceride und/oder Fettsäuren und/oder Fettsäurederivate mit einem Anteil von maximal 25 Gew.-% in der Minengrundmasse enthalten sind.

9. Farbstiftmine oder Farbkreide nach einem der vorhergehenden Ansprüche, **dadurch gekennzeichnet, dass** als Füllstoff zumindest ein anorganischer Füllstoff, insbesondere Talkum, Bimsmehl, Kaolin, Glimmer, Aluminiumsilikat, Ton und/oder Calciumcarbonat, und/oder zumindest ein organischer Füllstoff, insbesondere Zellulosefasern, Holzfasern und/oder Textilfasern, und/oder zumindest ein anorganisches Pigment, insbesondere Titaniumdioxid, Zinkoxid und/oder Bariumsulfat, enthalten sind.

10. Farbstiftmine oder Farbkreide nach einem der vorhergehenden Ansprüche, **dadurch gekennzeichnet, dass** als Farbmittel zumindest ein Farbstoff und/oder zumindest ein anorganisches Pigment und/oder zumindest ein organisches Pigment in der Minengrundmasse enthalten ist.

11. Farbstiftmine oder Farbkreide nach einem der vorhergehenden Ansprüche, **dadurch gekennzeichnet, dass** das zumindest eine Farbmittel mit einem Anteil von 0,5 - 50 Gew.-%, insbesondere mit einem Anteil von 0,5 - 40 Gew.-% in der Minengrundmasse enthalten ist.

12. Farbstiftmine oder Farbkreide nach einem der vorhergehenden Ansprüche, **dadurch gekennzeichnet, dass** in der Minengrundmasse zumindest ein Additiv, insbesondere ein Gleitmittel, enthalten ist.

13. Farbstiftmine oder Farbkreide nach Anspruch 12, **dadurch gekennzeichnet, dass** das Additiv mit einem Anteil von maximal 10 Gew.-% in der Minengrundmasse enthalten ist.

## Claims

1. Coloured pencil lead or coloured chalk for painting and/or drawing with a lead base composition containing waxes, at least one filler with a proportion of 35 to 80% by weight in the lead base composition and at least one colouring agent, **characterised in that**
at least one oxidized ethylene vinyl acetate wax (EVA) and at least one functionalized metallocene polyolefin wax are present as waxes.

2. Coloured pencil lead or coloured chalk according to claim 1, **characterized in that** said at least one oxidized ethylene vinyl acetate wax has a dropping point between 90 and 110°C and an acid number between 15 and 35 mg KOH/g.

3. Coloured pencil lead or coloured chalk according to any one of claims 1 or 2, **characterized in that** the at least one oxidized ethylene vinyl acetate wax is present in a proportion of 0.5 to 25% by weight in the lead base composition.

4. Coloured pencil lead or coloured chalk according to any one of the preceding claims, **characterized in that** the at least one functionalized metallocene polyolefin wax has a dropping point between 120 and 160°C and an acid number between 16 and 50 mg KOH/g.

5. Coloured pencil lead or coloured chalk according to any one of the preceding claims, **characterized in that** the at least one functionalized metallocene polyolefin wax is present in a proportion of 0.5 to 25% by weight in the lead base composition.

6. Coloured pencil lead or coloured chalk according to any one of the preceding claims, **characterized in that** further waxes and/or triglycerides and/or fatty acids and/or fatty acid derivatives are contained in the lead base composition.

7. Coloured pencil lead or coloured chalk according to claim 6, **characterised in that** beeswax, synthetic beeswax, ester waxes, montan wax, paraffin waxes, natural waxes, in particular carnauba wax, rice wax, rapeseed waxes, hardened vegetable waxes, in particular hydrogenated soya bean oil or hydrogenated rhizinus oil, and/or stearic acid are contained.

8. Coloured pencil lead or coloured chalk according to any one of claims 6 or 7, **characterized in that** the further waxes and/or triglycerides and/or fatty acids and/or fatty acid derivatives are present in a proportion of at most 25% by weight in the lead base composition.

9. Coloured pencil lead or coloured chalk according to any one of the preceding claims, **characterized in that** at least one inorganic filler, in particular talc, pumice powder, kaolin, mica, aluminium silicate, clay and/or calcium carbonate, and/or at least one organic filler, in particular cellulose fibres, wood fibres and/or textile fibres, and/or at least one inorganic pigment, in particular titanium dioxide, zinc oxide and/or barium sulphate, are contained as filler.

10. Coloured pencil lead or coloured chalk according to any one of the preceding claims, **characterized in that** at least one dye and/or at least one inorganic pigment and/or at least one organic pigment is present as colouring agent in the lead base composition.

11. Coloured pencil lead or coloured chalk according to any one of the preceding claims, **characterized in that** the at least one colouring agent is present in the lead base composition in a proportion of 0.5 - 50% by weight, in particular in a proportion of 0.5 - 40% by weight.

12. Coloured pencil lead or coloured chalk according to any one of the preceding claims, **characterized in that** at least one additive, in particular a lubricant, is contained in the lead base composition.

13. Coloured pencil lead or coloured chalk according to claim 12, **characterized in that** the additive is present in a proportion of at most 10% by weight in the lead base composition.

## Revendications

1. Mine de couleur ou craie de couleur pour peindre et/ou dessiner avec une masse de base de mine contenant des cires, au moins une charge avec une proportion de 35 à 80 % en poids dans la masse de base de mine et au moins un agent colorant, **caractérisée en ce que** on contient comme cires au moins une cire d'éthylène acétate de vinyle (EVA) oxydée et au moins une cire de polyoléfine métallocène fonctionnalisée.

2. Mine de couleur ou craie de couleur selon la revendication 1, **caractérisée en ce que** ladite au moins une cire d'éthylène acétate de vinyle oxydée présente un point de goutte compris entre 90 et 110°C et un indice d'acide compris entre 15 et 35 mg KOH/g.

3. Mine de couleur ou craie de couleur selon l'une des revendications 1 ou 2, **caractérisée en ce que** l'au moins une cire d'éthylène acétate de vinyle oxydée est contenue dans la masse de base de la mine dans une proportion de 0,5 à 25 % en poids.

4. Mine de couleur ou craie de couleur selon l'une quelconque des revendications précédentes, **caractérisée en ce que** ladite au moins une cire de polyoléfine métallocène fonctionnalisée présente un point de goutte compris entre 120 et 160°C et un indice d'acide compris entre 16 et 50 mg KOH/g.

5. Mine de couleur ou craie de couleur selon l'une des revendications précédentes, **caractérisée en ce que** l'au moins une cire de polyoléfine métallocène fonctionnalisée est contenue dans la masse de base de la mine dans une proportion de 0,5 à 25 % en poids.

6. Mine de couleur ou craie de couleur selon l'une des revendications précédentes, **caractérisée en ce que** d'autres cires et/ou triglycérides et/ou acides gras et/ou dérivés d'acides gras sont contenus dans la masse de base de la mine.

7. Mine de couleur ou craie de couleur selon la revendication 6, **caractérisée en ce qu'**elle contient de la cire d'abeille, de la cire d'abeille synthétique, des cires d'ester, de la cire de lignite, de la cire de paraffine, des cires naturelles, en particulier de la cire de carnauba, de la cire de riz, de la cire de colza, des cires végétales durcies, en particulier de l'huile de soja hydrogénée ou de l'huile de ricin hydrogénée, et/ou de l'acide stéarique.

8. Mine de couleur ou craie de couleur selon l'une des revendications 6 ou 7, **caractérisée en ce que** les autres cires et/ou triglycérides et/ou acides gras et/ou dérivés d'acides gras sont contenus dans la masse de base de la mine dans une proportion maximale de 25 % en poids.

9. Mine de couleur ou craie de couleur selon l'une des revendications précédentes, **caractérisée en ce qu'**elle contient comme charge au moins une charge inorganique, notamment du talc, de la poudre de ponce, du kaolin, du mica, du silicate d'aluminium, de l'argile et/ou du carbonate de calcium, et/ou au moins une charge organique, notamment des fibres de cellulose, des fibres de bois et/ou des fibres textiles, et/ou au moins un pigment inorganique, notamment du dioxyde de titane, de l'oxyde de zinc et/ou du sulfate de baryum.

10. Mine de couleur ou craie de couleur selon l'une des revendications précédentes, **caractérisée en ce qu'**au moins un colorant et/ou au moins un pigment inorganique et/ou au moins un pigment organique est contenu comme agent colorant dans la masse de base de la mine.

11. Mine de couleur ou craie de couleur selon l'une des revendications précédentes, **caractérisée en ce que** l'au moins un agent colorant est contenu dans la masse de base de la mine dans une proportion de 0,5 à 50 % en poids, en particulier dans une proportion de 0,5 à 40 % en poids.

12. Mine de couleur ou craie de couleur selon l'une des revendications précédentes, **caractérisée en ce qu'**au moins un additif, en particulier un lubrifiant, est contenu dans la masse de base de la mine.

13. Mine de couleur ou craie de couleur selon la revendication 12, **caractérisée en ce que** l'additif est contenu dans la masse de base de la mine dans une proportion maximale de 10 % en poids.
